# EUROPÄISCHE PATENTSCHRIFT

(11) **EP 0 472 529 B1**
(45) Veröffentlichungstag und Bekanntmachung des Hinweises auf die Patenterteilung: **24.02.1993**
(21) Anmeldenummer: 90905436.3
(22) Anmeldetag: 11.04.1990
(51) Int. Cl.: B60R 22/36

(54) **GURTAUFROLLER MIT DEBLOCKIEREINRICHTUNG**
SAFETY-BELT ROLLER WITH DEBLOCKING DEVICE
ENROULEUR DE CEINTURE DE SECURITE AVEC DISPOSITIF DE DEBLOCAGE

(30) Priorität: 25.04.1989 DE 3913631
(43) Veröffentlichungstag der Anmeldung: 04.03.1992
(73) Patentinhaber: AUTOFLUG GMBH & CO FAHRZEUGTECHNIK, D-25462 Rellingen (DE)
(72) Erfinder: BUTENOP, Klaus, D-2209 Herzhorn (DE)
(74) Vertreter: Müller, Karl-Ernst, Dr., Dipl.-Ing.
(86) Internationale Anmeldenummer: DE9000283
(87) Internationale Veröffentlichungsnummer: WO9012709

(56) Entgegenhaltungen:
- DE-A- 3 441 532
- US-A- 3 862 726
- US-A- 3 901 459
- US-A- 4 635 874

## Beschreibung

Die Erfindung betrifft einen selbstsperrenden Gurtaufroller für ein Sicherheitsgurtsystem in Kraftfarhrzeugen mit einer in einem Gehäuse gelargerten Gurtaufwickelwelle und einem an einem Wellenende exzentrisch gelagerten Sperrglied, das in Folge einer von einem gurtband-und/oder fahrzeugsensitiven Blockiersystem gesteuerten radialen Auslenkung gegen gehäsefeste Anschläge stößt und so die Gurtaufwickelwelle blockiert, wozu das Sperrglied and eine außenverzahnte Steuerscheibe gekoppelt ist, welche einerseits von einem Kugelsensor als fahrzeugsensitivem System blockierbar ist und andererseits als gurtbandsensitives System eine drehbar gelagerte, federbelastete und mit einem Steuerhebel zusammenwirkende Schwungmasse aufweist, wobei der Steuerhebel in eine an einer gehäusefesten Lagerglocke angeordnete Innenverzahnung einschwenkbar ist, die ihrerseits mit einer Außenverzahnung korrespondiert, wobei die Verzahnungen gegenüber der Lagerglocke frei drehbar und durch einen außen angeordneten Hebel festlegbar sind, der als aktivierbare Steuereinrichtung für eine Zu- beziehungsweise Abschaltung des gurtband- und des fahrzeugsensitiven Blockiersystems an die Steuerscheibe wirkt.

Ein gattungsgemäßer Gurtaufroller ist in der DE-OS 34 41 532 beschrieben; bei dem bekannten Gurtaufroller ist als Steuereinrichtung für die Zu- beziehungsweise Abschaltung des gurtband- und des fahrzeugsensitiven Blockiersystems ein Elektromagnet vorgesehen, der bei Erregung über eine Schubstange den mit der in gehäusefesten Lagerglocke frei drehbaren Außenverzahnung zusammenwirkenden Hebel in dessen Eingriffsstellung mit der Außenverzahnung bringt, wodurch die Außenverzahnung mit ihrer korrespondierenden Innenverzahnung an der Lagerglocke festgelegt ist, so daß das mit der Steuerscheibe des Gurtaufrollers zusammenwirkende Trägheits-Steuersystem ein Funktionswiderlager findet. Steht der Hebel nicht in Eingriff mit der in der Lagerglocke drehbaren Außenverzahnung, so ist sowohl das gurtbandsensitive wie auch das fahrzeugsensitive Blockiersystem abgeschaltet, weil dann ein Funktionswiderlager für das Zusammenwirken von Steuerscheibe und Trägheits-Steuersystem nicht gegeben ist; in dieser Stellung drückt die Schubstange gleichzeitig auch den mit der Außenverzahnung der Steuerscheibe des Kugelsensors zusammenwirkenden Sensorhebel außer Eingriff mit der Steuerscheibe.

Mit der bekannten Vorrichtung ist der Nachteil verbunden, daß die Ansteuerung der Zu- und Abschaltung des jeweiligen Blockiersystems über einen Elektromagneten aufwendig ist, weil zusätzlich zu der Umsetzungsmechanik noch eine besondere Sensorsteuerung erforderlich ist und eingerichtet sein muß. Hier liegen auch Schwachstellen der bekannten Vorrichtung, denn bei einem Ausfall des Magneten wie auch des Sensors oder Störungen in der Signalübertragung ist die Funktion des Gurtaufrollers im Hinblick auf eine Selbstsperrung im Fahrbetrieb des Kraftfahrzeuges nicht mehr gewährleistet, wenn sich der Hebel ständing außer Eingriff mit der Außenverzahnung befindet.

Der Erfindung liegt daher die Aufgabe zugrunde, einen Gurtaufroller mit den gattungsgemäßen Merkmalen so weiterzubilden, daß die Ansteuerung für die Zu- und Abchaltung des gurtband- und des fahrzeugsensitiven Blockiersystems vereinfacht und die Betriebssicherheit eines derartig ausgebildeten Gurtaufrollers verbessert ist.

Die Lösung dieser Aufgabe ergibt sich aus dem Hauptanspruch; vorteilhafte Ausgestallungen und Weiterbildungen der Erfindung sind in den Unteransprüchen angegeben.

Die Erfindung sieht dabei vor, daß der die Zu- und Abschaltung bewirkende Hebel einen Arm zum Eingriff in die an der Lagerglocke angeordnete Außenverzahnung und einen weiteren Arm zum Abtasten des auf der Gurtaufwickelwelle aufgespulten Gurtbandwickels aufweist und in seine Eingriffsstellung mit der Außenverzahnung federbelastet am Gurtaufrollergehäuse drehbar gelagert ist.

Hiermit ist der Vorteil verbunden, daß eine besondere Erfassung eines Steuersignals und dessen Umsetzung entfällt; als Bezugsgröße für die Zu- und Abschaltung ist in einfacher Weise die Stärke des auf der Gurtaufwickelwelle befindlichen und daher abtastbaren Gurtbandwickels gewählt; ist das Gurtband nämlich vollständig auf der Gurtaufwickelwelle aufgespult und weist somit der abzutastende Gurtbandwickel seine größte Stärke auf, so befindet sich der Sicherheitsgurt zwangsläufig in abgelegtem Zustand, so daß für diesen Fall die Abschaltung des gurtband- und des fahrzeugsensitiven Blockiersystems für den dann nur möglichen Anlegevorgang des Sicherheitsgurtes eingerichtet ist. Hierzu ist in vorteilhafter Weise der entsprechende Hebel zum Festlegen der Außenverzahnung mit zwei Armen ausgebildet, wobei der eine Arm die Abtastfunktion für den Gurtbandwickel übernimmt. Eine Veränderung der Dicke des Gurtbandwickels führt somit aufgrund der eingestellten Federbelastung des Hebels in die Eingriffsstellung automatisch zu einer Verschwenkung des Hebels in seine Eingriffsstellung oder seine Freigabestellung, je nachdem, welche Stärke der Gurtbandwickel aufweist.

Aus der US-A-3 862 726 ist ein Gurtaufroller bekannt, bei welchem ein Federarm einer das Sperrglied in seine Sperrstellung mit der Außenverzahnung der zugeordneten Gurtaufwickelwelle belastenden Feder an dem Gurtbandwickel anliegt und die Dicke des auf der Gurtaufwickelwelle aufgespulten Gurtbandwickels abtastet. Um bei abgewickeltem Gurtband und demzufolge eingeschwenktem Federarm die daraus zwangsläufig folgende Blockierung der Gurtaufwickelwelle durch das nachgeführte Sperrglied zu vermeiden, sind in nachteiliger Weise zusätzliche Steuervorrichtungen erforderlich.

Ein weiterer Vorteil der Erfindung ergibt sich daraus, daß die Gurtaufroller mit einem entsprechend eingerichteten fahrzeugund gurtbandsensitiven Blockiersystem in einfacher Weise nachrüstbar sind, denn es hat sich gezeigt, daß die Abschaltung der Blockierfunktionen auch bei Dreipunkt-Sicherheitsgurten wünschenswert ist, die nicht im Rahmen von passiven Sicherheitsgurtsystemen verwendet werden. Auch bei üblichen Dreipunktgurten soll ein Einrasten der kraftaufnehmenden Blockierelemente bei der Ablegeposition des Gurtes verhindert werden, um ein "Hakeln" der Bauteile des Sicherheitsgurtaufrollers beim Anlegevorgang zu vermeiden. Insbesondere in Verbindung mit einer heute üblicher werdenden Höhenverstellung des oberen Umlenkbeschlages kann sich das "Hakeln" des Sicherheitsgurtes beim Anlegevorgang als nachteilig erweisen, und im Hinblick auf eine beispielsweise in Verbindung mit einer Sitzverstellung angetriebenen automatischen Gurthöhenverstellung können die Verstellelemente überlastet und zerstört werden. Die vorgenannten Probleme sind in vorteilhafter Weise mit den in konstruktiv einfacher Weise einzurichtenden Merkmalen der Erfindung vermieden.

Bei einem bevorzugten Ausführungsbeispiel der Erfindung ist die Sicherheit der Zu- und Abschaltvorrichtung dadurch erhöht, daß der Hebel an seinem der Eingriffspitze gegenüberliegenden über seine Drehachse hinausragenden Ende mit einem den Hebel in seiner Eingriffsstellung belastetenden Gewicht versehen ist; auch bei einem Ausfall oder einer Funktionsstörung der den Hebel in seine Eingriffsstellung belastenden Drehfeder sorgt das Gewicht automatisch für die Halterung des Hebels in seiner Eingriffsstellung, so daß auf jeden Fall das Trägheits-Steuersystem in der durch den Hebel festgelegten Außenverzahnung mit korrespondierender Innenverzahnung ein Funkstionswiderlager findet, so daß die Funktionssichrheit des Gurtaufrollers insgesamt gegeben ist.

In der Zeichnung ist ein Ausführungsbeispiel der Erfindung wierdergegeben, welches nachstehend beschrieben ist. Es zeigen:
Figure 1 eine Aufsicht auf die sogenannte Systemseite eines Gurtaufrollers bei teilweise weggeschnittener Lagerglocke und abgeschalteten Blockiersystemen,
Figur 2 den Gegenstand der Figur 1 bei zugeschalteten Blockiersystemen.

In der Zeichnung ist jeweils nur die Zu- und Abschaltvorrichtung für das gurtband- und das fahrzeugsensitive Blockiersystem dargestellt, so daß hinsichtlich der Funktion des Gurtaufrollers im einzelnen auf den Stand der Technik gemäß der DE-OS 34 41 532 verwiesen wird. Grundsätzlich geht die Zeichnung von einem selbstsperrenden Gurtaufroller 10 mit sogenannter radialer Blockierung aus; wie bei der gewählten Darstellung nicht erkennbar, ist in einem U-artigen Gehäuse, von welchem nur ein die sogenannte Systemseite des Gurtaufrollers 10 tragender U-Schenkel 11 dargestellt ist, eine Gurtaufwickelwelle gelagert, die beispielweise mit einem Wellenfortsatz den Gehäuseschenkel 11 durchgreift. Auf der Gurtaufwickelwelle befindet sich ein Gurtbandwickel 12, dessen Stärke bei abgelegtem Sicherheitsgurt am größten ist und beim Anlegevorgang durch Abwickeln des Gurtbandes von der Gurtaufwickelwelle abnimmt.

Auf dem Wellenfortsatz ist exzentrisch ein radial bis zum Eingriff in eine gehäusefeste Verzahnung auslenkbares Sperrglied gelagert, dessen radiale Bewegung zwischen einer Freigabe- und einer Blockierstellung über eine Steuerscheibe gesteuert wird. Die Steuerscheibe ist ihrerseits sowohl von dem sogenannten gurtbandsensitiven wie auch von dem fahrzeugsensitiven Blockiersystem steuerbar.

Das im einzelnen nicht dargestellte gurtbansensitive System, welches zu einer Blockierung des Gurtaufrollers bei plötzlichen Auszugsbewegungen des Gurtbandes führen soll, geht aus von der Steuerscheibe, auf der mittig eine drehbar angeordnete und federbelastete Schwungmasse gelagert ist. Im Bereich der möglichen Drehbewegung der Schwungmasse ist ein einseitig abgestützter Steuerhebel vorgesehen, der durch die Schwungmasse nach außen auslenkbar ist.

Auf die Steuerscheibe aufgesetzt ist eine sich an dem U-Schenkel 11 abstützende gehäusefeste Lagerglocke 13, an welcher eine mit dem Steuerhebel zusammenwirkende Innenverzahnung frei drehbar angeordnet ist, wobei der Abstand der Innenverzahnung der Lagerglocke 13 zum Steuerhebel der Steuerscheibe derart gewählt ist, daß der Steuerhebel bei seiner Auslenkung infolge der Bewegung der Schwungmasse der Steuerscheibe in Eingriff mit der Innerverzahnung der Lagerglocke 13 kommt.

Die Funktion eines derartig ausgebildeten gurtbandsensitiven Blockiersystems ergibt sich insbesondere aus dem zur Bildung der Gattung herangezogenen Stand der Technik.

Das fahrzeugdsensitive System wird gebildet von einem Kugelsensor 14, dessen in einer Kalotte angeordnete Kugel 15 die Beschleunigungs- beziehungsweise Bremsbewegungen des Fahrzeugs in die Bewegung eines Sensorhebels 16 umsetzt, der seinerseits zum Eingriff in eine Außenverzahnung der Steuerscheibe eingerichtet ist. Jedliche Auslenkung der Kugel 15 aus ihrer "Normallage" bringt den Sensorhebel 16 in Eingriff mit der sich mit der Gurtaufwickelwelle jeweils drehenden Steuerscheibe, wodurch die Steuerscheibe in ihrer weiteren Drehbewegung angehalten wird und das Sperrglied aufgrund des vorgegebenen Funktionsablaufes in die Blockierstellung der Gurtaufwickelwelle auslenkt.

Im Hinblick auf die Zu- beziehungsweise Abschaltung der vorstehend bezeichneten Blockiersysteme ist auf der Lagerglocke 13 eine mit der Innerverzahnung einstückig verbundene äußere Verzahnung 17 angeordnet, wobei die Verzahnungen in der Lagerglocke 13 und auf einem nicht dargestellten stiftartigen Fortsatz der Gurtaufwickelwelle drehbar gestaltet sind.

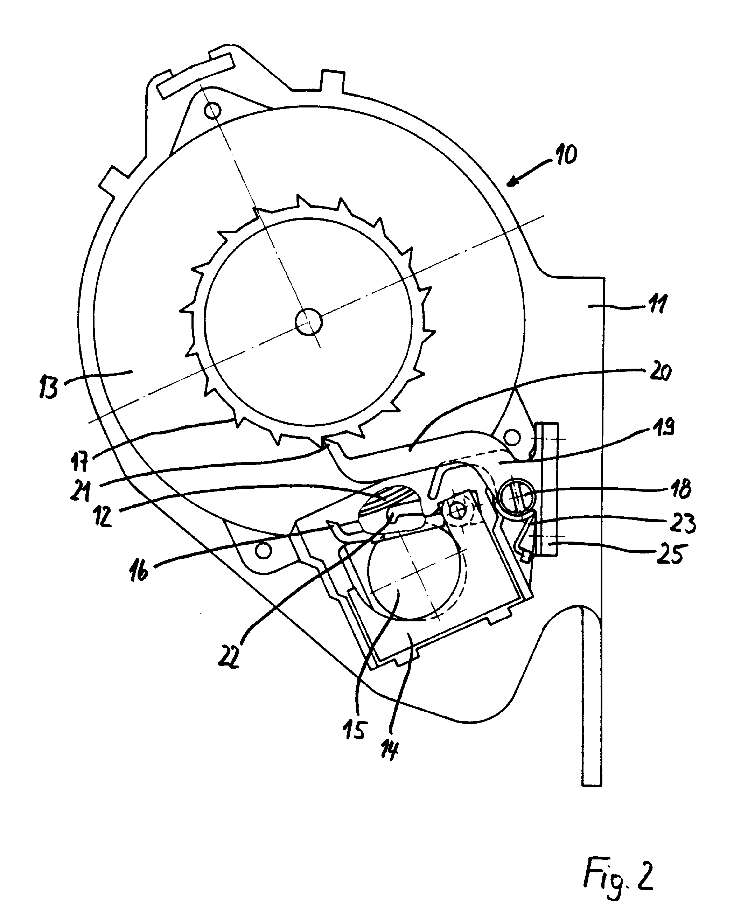

An dem U-Schenkel 11 des Gurtaufrollergehäuses ist um eine Drehachse 18 schwenkbar ein zweiarmiger Hebel 19 gelagert, dessen einer Arm 20 mit einer Eingriffsspitze 21 mit der in der Lagerglocke 13 frei drehbaren Außenverzahnung 17 zusammenwirkt und dessen anderer Arm 22 als Abtastarm für den Gurtbandwickel 12 ausgebildet ist. Der Hebel 19 ist über eine an seiner Drehachse 18 angeordnete Drehfeder 23 in seine sich aus Figur 2 ergebende Eingriffsstellung federbelastet.

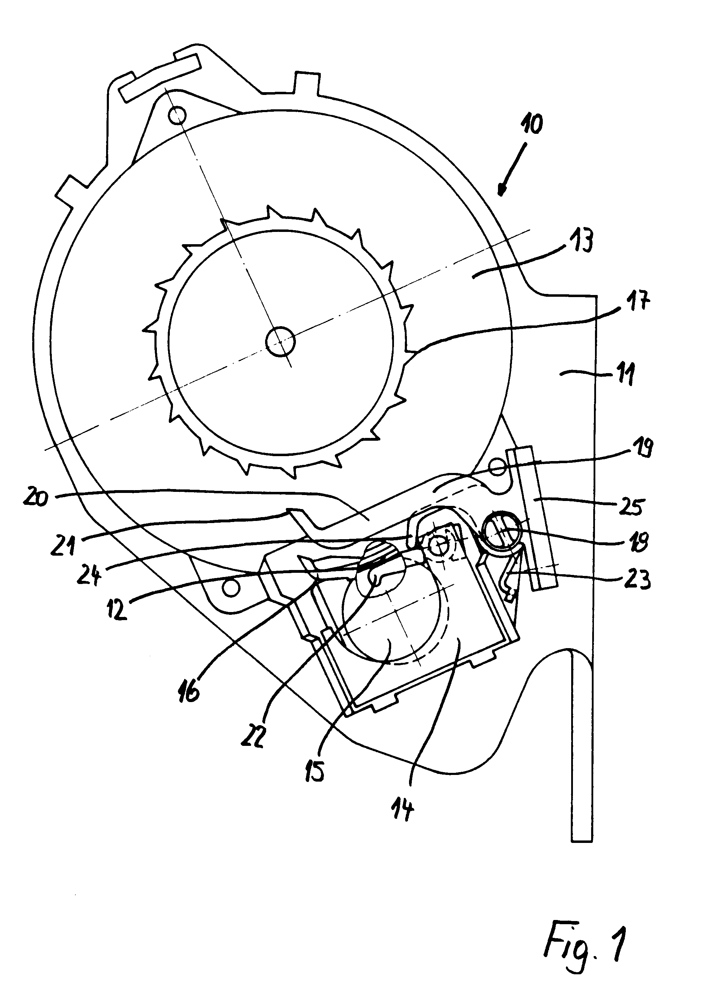

Der Hebel 19 weist ferner einem Ansatz 24 auf, der in der aus Figur 1 ersichtlichen Freigabestellung des Hebels 19 auf den Sensorhebel 16 drückt, und diesen auch bei Bewegungen der Kugel 15 in der Kalotte an einem Ausschwenken in Richtung der Außenverzahnung der nicht dargestellten Steuerscheibe hindert.

An seinem hinteren, der Eingriffsspitze 21 abgewandten und über die Drehachse 18 hinausragenden Ende ist der Hebel 19 mit einem Gewicht 25 versehen, welches die Wirkung der Drehfeder 23 unterstützt beziechungsweise bei deren Ausfall ersetzt, da aufgrund der eingestellten Hebelwirkung die Eingriffsspitze 21 des Hebels 19 durch das Gewicht 25 jeweils in Eingriff mit der Außenverzahnung 17 gehalten wird.

Wie sich aus der Figur 1 entnehmen läßt, ist bei voll aufgewickeltem Sicherheitsgurt und maximaler Stärke des Gurtbandwickels 12 in Ablegeposition des Gurtbandes der Arm 22 des Hebels 19 gegen die Wirkung der Feder 23 entgegen dem Uhrzeigersinn verdreht, so daß in dieser Stellung die Eingriffsspitze 21 des Armes 20 des Hebels 19 in keinem Fall in Eingriff mit der Außenverzahnung 17 in der Lagerglocke 13 kommen kann. Dies hat zur Folge, daß die Außenverzahnung 17 und somit auch die daran gekoppelte und mit dem Trägheits-Blockiersystem zusammenwirkende Innenverzahnung in der Lagerglocke 13 frei drehbar ist, so daß die Steuerhebel im Inneren der Lagerglocke kein Funktionswiderlager finden. Somit sind sowohl das gurtband- wie auch das fahrzeugsensitive Blockiersystem bei maximalem Gurtbandwickel 12 gemäß der aus Figur 1 ersichtlichen Stellung abgeschaltet.

Nimmt nun die Stärke des Gurtbandwickels beim Anlegen des Sicherheitsgurtes ab, wie dies in Figur 2 dargestellt ist, so folgt der Abtastarm 22 des Hebels 19 der Abwickelbewegung, indem der Arm 19 im Uhrzeigersinn verdreht wird, so daß die Eingriffsspitze 21 des Hebels 19 nun in Eingriff mit der Außenverzahnung 17 kommt und somit die Verzahnungen in der gehäusefesten Lagerglocke 13 festlegt, wodurch die Funktion der Blockiersysteme des Gurtaufrollers zugeschaltet ist.

Die der abnehmenden Stärke des Gurtbandwickels 12 folgende Drehbewegung des Hebels 19 wird dabei durch die Wirkung der Drehfeder 23 herbeigeführt, welche den Hebel 19 in seine aus der Figur 2 ersichtliche Eingriffsstellung belastet; selbst wenn es zu einer Funktionsstörung oder zu einem Ausfall dieser Drehfeder kommt, ist durch die Anordnung des Gewichtes 25 sichergestellt, daß in jedem Fall die Funktion des Gurtaufrollers auch bei einem Ausfall der Drehfeder gewährleistet ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller (10) für ein Sicherheitsgurtsystem in Kraftfahrzeugen mit einer in einem Gehäuse (11) gelagerten Gurtaufwickelwelle und einem an einem Wellenende exzentrisch gelagerten Sperrglied, das in folge einer von einem gurtband- und/oder fahrzeugsensitiven Blockiersystem gesteuerten radialen Auslenkung gegen gehäusefeste Anschläge stößt und so die Gurtaufwickelwelle blockiert, wozu das Sperrglied an eine außenverzahnte Steuerscheibe gekoppelt ist, welche einerseits von einem Kugelsensor (14) als fahrzeugsensitivem System blockierbar ist und andererseits als gurtbandsensitives System eine drehbar gelagerte, federbelastete und mit einem Steuerhebel zusammenwirkende Schwungmasse aufweist, wobei der Steuerhebel in eine an einer gehäusefesten Lagerglocke (13) angeordnete Innenverzahnung einschwenkbar ist, die ihrerseits mit einer Außenverzahnung (17) korrespondiert, wobei die Verzahnungen gegenüber der Lagerglocke (13) frei drehbar und durch einen außen angeordneten Hebel (19) festlegbar sind, der als aktivierbare Steuereinrichtung für eine Zu- beziehungsweise Abschaltung des gurtband- und des fahrzeugsensitiven Blockiersystems an die Steuerscheibe wirkt, dadurch gekennzeichnet, daß der Hebel (19) einen Arm (20) zum Eingriff in die an der Lagerglocke (13) angeordnete Außenverzahnung (17) und einen Arm (22) zum Abtasten der Dicke des auf der Gurtaufwickelwelle aufgespulten Gurtbandwickels (12) aufweist und in seine Eingriffsstellung mit der Außenverzahnung (17) mittels einer Feder (23) belastet am Gurtaufrollergehäuse (11) drehbar gelagert ist

2. Gurtaufroller nach Anspruch 1, dadurch gekennzeichnet, daß der Hebel (19) einen Ansatz (24) aufweist, der in der Freigabestellung des Hebels (19) für die Außenverzahnung (17) den Sensorhebel (16) des Kugelsensors (14) außer Eingriff mit der Außenverzahnung der Steuerscheibe hält.

3. Gurtaufroller nach Anspruch 1 oder 2, dadurch gekennzeichnet, daß der Hebel (19) an seinem der Eingriffsspitze (21) gegenüberliegenden, über seine Drehachse (18) hinausragenden Ende mit einem den Hebel (19) in seiner Eingriffsstellung belastenden Gewicht (25) versehen ist.

## Claims

1. Self-locking safety belt reeling device (10) for a safety belt system in motor vehicles comprising a safety belt reeling shaft rotatably mounted in a casing (11) and, eccentrically mounted at one shaft end, a locking member which, as a result of a radial deflection controlled by a locking system sensitive to the safety belt and/or vehicle abuts against abutments in fixed relationship to the casing, thereby locking the safety belt reeling shaft, for which purpose the locking member is coupled to a control disc with an external toothing which on the one hand is lockable by a spherical sensor (14) serving as a vehicle sensing system and on the other hand, serving as a belt sensitive system, comprises a pivotally mounted inertia mass which is springloaded and coacts with a control lever, the control lever being adapted to be swung into engagement with an inner toothing provided on a bearing cup (13) in fixed relationship with the casing and which in turn corresponds to an outer toothing (17), the toothings being freely rotatable in relation to the bearing cup (13) and adapted to be locked by means of an externally fitted lever (19) which acts as an activatable control means for activating or deactivating the safety belt-sensitive and the vehicle-sensitive locking system to or from the control disc, characterized in that the lever (19) comprises an arm (20) for engaging into the outer toothing (17) provided on the bearing cup (13) and an arm (22) for sensing the thickness of the safety belt coil (12) wound onto the safety belt reeling shaft and is pivotally mounted on the safety belt reeling device casing (11), spring biased (23) towards its position of engagement with the outer toothing (17).

2. A safety belt reeling device according to claim 1, characterized in that the lever (19) comprises a projection (24) which in the release position of the lever (19) for the outer toothing (17) maintains the sensor lever (16) of the spherical sensor (14) out of engagement with the outer toothing of the control disc.

3. A safety belt reeling device according to claim 1 or 2, characterized in that the lever (19) is provided at its end that is opposite the engaging tip (21) and projects beyond its pivoting axis (18) with a weight (25) which biases the lever (19) towards its engagement position.

## Revendications

1. Enrouleur de ceinture (10) autobloquant, pour un système de ceinture de sécurité dans des véhicules automobiles, avec un arbre d'enroulement de ceinture, monté rotatif dans un carter (11), et un organe de blocage, monté rotatif excentré sur une extrémité d'arbre, qui, par suite d'une déviation radiale, commandée par un système de blocage sensible à la sangle de ceinture et/ou au véhicule, vient heurter contre des butées fixes par rapport au carter et bloque ainsi l'arbre d'enroulement de ceinture, à l'effet de quoi l'organe de blocage est couplé à un disque de commande à denture extérieure qui est susceptible d'être bloqué, d'une part, par un capteur à bille (14), servant de système sensible au véhicule, et, d'autre part, présente une masse d'inertie, sollicitée par un ressort, servant de système sensible à la sangle de ceinture et montée rotative, coopérant avec un levier de commande, le levier de commande étant susceptible de s'escamoter par pivotement, dans une denture intérieure disposée sur une cloche-support (13) fixée sur le carter, denture intérieure qui correspond elle-même à une denture extérieure (17), les dentures étant susceptibles de tourner librement par rapport à la cloche-support (13) et d'être bloquées au moyen d'un levier (19) monté extérieurement, agissant sur le disque de commande, comme dispositif de commande activable pour opérer une mise en service, ou selon le cas hors service du système de blocage sensible à la sangle de ceinture et au véhicule, caractérisé en ce que le levier (19) présente un bras (20) destiné à s'insérer dans la denture extérieure (17) disposée sur la cloche-support (13) et un bras (22) destiné à palper l'épaisseur de l'enroulement de sangle de ceinture (12) enroulé sur l'arbre d'enroulement de ceinture et est monté rotatif sur le carter d'enrouleur de ceinture (11), en étant sollicité au moyen d'un ressort (23), lorsqu'il se trouve dans sa position d'engrènement avec la denture extérieure (17).

2. Enrouleur de ceinture selon la revendication 1, caractérisé en ce que le levier (19) présente un appendice (24) qui, lorsque le levier (19) est dans la position de libération de la denture extérieure (17), assure le maintien du levier de capteur (16) du capteur à bille (14) hors de prise avec la denture extérieure du disque de commande.

3. Enrouleur de ceinture selon la revendication 1 ou 2, caractérisé en ce que le levier (19) est pourvu, à son extrémité située à l'opposé de sa pointe d'engagement (21), et dépassant de son axe de rotation (18), d'une masse (25) sollicitant le levier (19) lorsqu'il est dans sa position d'engagement.
